# FASCICULE DE BREVET EUROPEEN

(11) **EP 0 755 844 B1**
(45) Date de publication et mention de la délivrance du brevet: **24.10.2001**
(21) Numéro de dépôt: 96401667.9
(22) Date de dépôt: 25.07.1996
(51) Int. Cl.: B62D 1/19

(54) **Dispositif d'absorption d'énergie et de guidage pour colonne de direction de véhicule automobile**
Energieaufnehmende und führende Einrichtung für die Lenksäule eines Kraftfahrzeugs
Energy absorbing and guiding device for the steering column of a motor vehicle

(30) Priorité: 26.07.1995 FR 9509108
(43) Date de publication de la demande: 29.01.1997
(73) Titulaire: LEMFORDER NACAM S.A., 41100 Vendome (FR)
(72) Inventeur: Fevre, Laurent, 41000 Saint-Sulpice (FR); Bodin, Jean-Christophe, 41100 Saint-Ouen (FR)
(74) Mandataire: Michelet, Alain

(56) Documents cités:
- EP-A- 0 289 049
- DE-A- 19 508 443
- DE-C- 3 521 644
- FR-A- 2 242 285
- GB-A- 1 300 284
- US-A- 5 082 311

## Description

La présente invention concerne les colonnes de direction de véhicules automobiles et a plus particulièrement pour objet une telle colonne équipée d'un dispositif d'absorption d'énergie et de guidage en cas de choc.

Pour améliorer la sécurité du conducteur d'une voiture lors d'une collision frontale, les colonnes de direction sont munies de systèmes, qui permettent de réduire la gravité du choc du conducteur sur le volant.

Ainsi, de nombreux dispositifs ont été conçus pour absorber progressivement l'énergie cinétique générée par l'impact, utilisant généralement des efforts de frottement ou de déformation.

Ces efforts doivent être particulièrement bien contrôlés pour absorber toute l'énergie due au choc sans produire de décélération trop importante de la colonne par rapport au châssis, pouvant être fatale au conducteur.

On trouve des illustrations de tels dispositifs dans les brevets FR-2.668.442, US-3.943.793 et GB-2.268.125.

Les colonnes comportent généralement un corps de colonne fixé au châssis par des pattes. On a déjà proposé de lier ces pattes au châssis par des organes de fixation et de monter des capsules coopérant avec les pattes afin d'absorber une partie de l'énergie lors d'un choc.

Cette disposition simple procure de bons résultats. Toutefois, il a été constaté que, lors d'un choc, la colonne peut être déviée de son axe, ce qui diminue l'efficacité de l'absorption d'énergie.

C'est pourquoi le guidage axial de la colonne de direction doit également être pris en compte. Cet aspect est encore plus important lorsqu'est utilisé un coussin gonflable de sécurité, du type couramment dénommé "air bag". Ce genre de dispositif contribue largement à diminuer la gravité du choc en répartissant au mieux l'effort du volant sur le thorax du conducteur, mais pour être pleinement efficace, il doit être accompagné du contrôle de la position et du déplacement de la colonne pendant le choc.

Les réalisations connues mettent en oeuvre deux systèmes ou moyens séparés:
- un premier système absorbant l'énergie cinétique du conducteur tout au long du déplacement.
- un second système assurant un guidage de la colonne.

Le document DE-C-35.21.644 décrit un montage de sécurité pour colonne de direction. Le montage de sécurité à un support en forme de U comportant des brides latérales de montage à une extrémité. Ces brides forment une pièce métallique unique avec le support et sont liées à la structure de la voiture par l'intermédiaire de plaques de montage fixées au châssis par des clavettes. Les brides latérales comportent chacune une fente orientée axialement et les plaques de montage forment pour chaque bride une glissière centrale bordée de deux rainures latérales, coopérant avec la fente de la bride.

Le document US-A-5.082.311 divulgue un assemblage de colonne de direction démontable pour absorption passive d'énergie d'impact. Cet assemblage comprend un support principal fixé à sa base au corps de la colonne de direction, qui est pourvu de membres latéraux s'étendant parallèlement à la colonne de direction. Dans chaque membre latéral, est pratiquée une fente de guidage formant deux rails latéraux, l'un des deux rails constituant un rail de guidage, et l'autre un rail d'absorption d'énergie. Un boulon traversant chaque fente de guidage maintient le support à la structure du véhicule.

Le document GB-A-1.300.284 concerne un assemblage de colonne de direction de véhicule à moteur. Il divulgue une colonne de direction reliée à la structure du véhicule au moyen d'un support de montage prévu pour se séparer de la structure du véhicule avec la colonne de direction lors d'impacts, par exemple en cas de choc du conducteur contre le volant.

Le support de montage est pourvu d'ouvertures dans lesquelles sont insérés des éléments formés en matière synthétique et permettant le passage d'une vis. Entre chaque élément formé en matière synthétique et la tête de la vis correspondante est intercalée une rondelle.

Le document EP-A-0.289.049 divulgue une structure d'attache au châssis d'un véhicule d'une colonne de direction comprenant un support fixé à un manchon destiné à recevoir un arbre de direction. La structure d'attache permet d'une part, le détachement sans à-coup du manchon par rapport au châssis quand une force d'impact est appliquée à la colonne de direction et d'autre part, la fixation fiable du manchon au châssis en temps normal.

Le but de la présente invention est de mieux contrôler l'absorption d'énergie cinétique sur la course de la colonne permise par le guidage, en combinant les moyens d'absorption d'énergie et les moyens de guidage dans un même dispositif.

Un but supplémentaire de l'invention est d'absorber une énergie comprise entre 200 et 600 Joules.

Un autre but de l'invention est de permettre aussi la réalisation et le montage simples de la colonne, et donc de réduire les coûts.

Un autre objet de l'invention est un dispositif d'absorption d'énergie et de guidage de colonne de direction de véhicule automobile, à laquelle est associé un coussin gonflable en cas de choc, ledit dispositif assurant également, grâce au guidage amélioré de la colonne, un positionnement correct du coussin, c'est-à-dire sensiblement dans l'axe de la colonne et au niveau du thorax du conducteur.

L'invention concerne donc une colonne de direction à dispositif d'absorption d'énergie pour véhicule automobile, du type connu par GB-A-1 300 284, c'est-à-dire comportant un corps de colonne monté sur le châssis par l'intermédiaire de pattes, lesquelles comportent des ouvertures pour le passage d'organes de fixation au châssis, et des ensembles ou capsules en matière plastique associés à au moins certaines des pattes et les enserrant au moins partiellement, les capsules étant maintenues par les organes de fixation, de manière qu'en cas de choc, les pattes solidaires de la colonne se déplacent par rapport aux capsules fixées au châssis, le déplacement relatif d'une patte par rapport à la capsule qui lui est associée ayant un effet d'absorption de l'énergie due au choc, lesdites ouvertures des pattes comportant des surfaces de guidage, disposées deux à deux de part et d'autre d'un plan vertical contenant l'axe de la colonne, coulissant dans les capsules en cas de choc. Les surfaces de guidage ont des longueurs suffisamment grandes pour contrôler le déplacement de la colonne dans une direction de guidage sensiblement parallèle à l'axe de la colonne.

Selon l'invention, un insert métallique cylindrique pourvu d'un rebord est interposé entre chacune des capsules et l'organe de fixation maintenant cette capsule, la partie cylindrique de l'insert étant située dans une fenêtre de la capsule au travers de laquelle passe l'organe de fixation et le rebord étant en appui sur la partie de la capsule entourant la fenêtre et recevant les efforts de l'organe de fixation.

Selon des modes de réalisation préférés, la colonne de direction est conforme à l'une des revendications 2 ou 3.

Préférentiellement, les surfaces de guidage sont disposées deux à deux symétriquement par rapport au plan vertical.

Les longueurs de guidage sur les pattes peuvent aller avantageusement jusqu'à 100 mm.

Selon un premier mode de réalisation, les surfaces de guidage sont sensiblement rectilignes et s'étendent dans une direction sensiblement parallèle au plan vertical.

Selon un mode de réalisation préféré de l'invention, au moins certaines surfaces de guidage présentent un profil variable selon l'axe de la colonne, permettant de contrôler la coopération entre ladite surface et la capsule coulissant sur elle. Dans un tel mode de réalisation, il est avantageux de choisir les surfaces de guidage telles qu'elles suivent une courbe évoluant de façon monotone en direction de l'ouverture associée, avec une pente comprise de préférence entre 10 et 30 degrés. Dans ce cas, plus la colonne se déplace lors d'un choc par rapport au châssis, plus la déformation des pattes est importante.

L'absorption progressive d'énergie obtenue selon l'invention est la mieux adaptée pour réduire les conséquences du choc. La colonne est également maintenue sur toute sa course entre les organes de fixation et parfaitement guidée.

Pour des raisons de symétrie et d'équilibrage mécanique, bien que cela ne soit pas absolument nécessaire, les différentes pattes ont généralement la même structure.

De préférence, au moins une patte est équipée d'au moins une butée ou arrêt consistant en une partie proéminente non parallèle à la direction de guidage, empêchant la colonne d'échapper aux fixations quand elle arrive en fin de course. L'arrêt est utilement muni d'un retour consistant en une protubérance inclinée par rapport à l'arrêt, approximativement orientée vers la capsule associée à l'arrêt.

Avantageusement, certaines au moins des ouvertures sont bordées de part et d'autre par rapport au plan vertical, de surfaces de guidage intérieures et extérieures.

On équilibre ainsi les efforts exercés dans les pattes associées en cas de choc, ce qui permet de minimiser les efforts appliqués à la colonne et au châssis, transversalement à l'axe de colonne.

Il est utile que certaines au moins des pattes comportent des trous complémentaires disposés au long d'au moins une partie des ouvertures des pattes. Ces trous complémentaires permettent de mieux maîtriser des déformations des pattes en cas de choc.

Dans une première forme de réalisation, où la colonne comprend une première partie ou partie arrière située du côté conducteur, et une seconde partie ou partie avant située vers l'avant dudit véhicule, et des fixations arrière et avant placées respectivement à l'arrière et à l'avant de la colonne, ledit dispositif de guidage et d'absorption d'énergie est prévu à la fois au niveau des fixations arrière et avant.

Selon une seconde forme de réalisation, le dispositif de l'invention est installé seulement au niveau de la fixation arrière, un système de guidage télescopique en soi connu du corps de la colonne étant alors prévu à l'avant pour permettre le mouvement de la partie arrière du corps par rapport à la fixation avant.

L'invention combine l'absorption d'énergie et le guidage de la colonne en contrôlant passivement l'orientation de guidage de la colonne lors d'un choc tout en ajustant de façon précise l'effort d'absorption d'énergie jusqu'à la fin du déplacement.

L'effort généré par le système d'absorption d'énergie est de préférence compris entre 2000 et 6000 N.

La colonne de direction munie d'un volant est préférentiellement équipée d'un coussin gonflable de sécurité qui sert à répartir l'effort du volant sur tout le thorax du conducteur.

Dans une forme de réalisation, le corps de colonne est fixé au châssis par un montage en soi connu de carré-renfort disposé dans un support, auquel cas les pattes sont solidaires de ce support.

Dans une autre forme de réalisation, le corps de la colonne est fixé au châssis par le montage en soi connu d'une pièce tubulaire épousant en partie le corps de la colonne, auquel cas les pattes sont solidaires de cette pièce tubulaire.

Avantageusement, un dispositif en soi connu de réglage de la colonne, en hauteur et/ou en inclinaison permet d'améliorer le confort du conducteur en fonctionnement normal.

Le corps de la colonne est alors ajustable par rapport au châssis du véhicule, donc aussi par rapport aux pattes.

La présente invention va maintenant être illustrée sans être aucunement limitée par des exemples de réalisation, en référence aux dessins annexés, sur lesquels:

La Figure 1 est une vue de dessus avec demi-coupe axiale d'une colonne de direction à dispositif d'absorption d'énergie et de guidage suivant l'invention.

La Figure 2 est une vue latérale axiale suivant la direction II de la colonne de direction représentée sur la Figure 1.

La Figure 3 est une coupe partielle suivant III-III de la Figure 1, montrant une vue agrandie d'une patte.

La Figure 4 est une coupe suivant III-III de la Figure 1.

La Figure 5 est une vue de dessus avec demi-coupe axiale de la colonne de direction de la Figure 1 pendant le déplacement de la colonne dû au choc.

La Figure 6 est une vue en coupe correspondant à la Figure 4 et montrant un second mode de réalisation du support.

La Figure 7 est une vue partielle longitudinale axiale d'une colonne de direction à dispositif d'absorption d'énergie et de guidage, correspondant à un deuxième mode de réalisation des pattes.

La Figure 8 est une vue longitudinale axiale des pattes, selon une variante du mode de réalisation de la Figure 7.

La Figure 9 est un diagramme représentant l'effort exercé par une capsule sur la patte associée selon le mode de réalisation des Figures 7 ou 8, exprimé en kN, en fonction de leur déplacement relatif, en mm.

La Figure 10 est une vue partielle longitudinale axiale d'une colonne de direction à dispositif d'absorption d'énergie et de guidage, correspondant à un troisième mode de réalisation des pattes.

La Figure 11 est un diagramme représentant l'effort exercé par une capsule sur la patte associée selon le mode de réalisation de la Figure 10, exprimé en kN en fonction de leur déplacement relatif en mm.

La Figure 12 est une vue partielle longitudinale axiale d'une colonne de direction à dispositif d'absorption d'énergie et de guidage, correspondant à un quatrième mode de réalisation des pattes.

La Figure 13 est un diagramme représentant l'effort exercé par une capsule sur la patte associée selon le mode de réalisation de la Figure 12, exprimé en kN en fonction de leur déplacement relatif en mm.

La Figure 14A est une vue longitudinale axiale d'un cinquième mode de réalisation d'une des pattes.

La Figure 14B est une vue longitudinale axiale d'un sixième mode de réalisation d'une des pattes.

La Figure 14C est une vue longitudinale axiale d'un septième mode de réalisation d'une des pattes.

Aux dessins, les mêmes chiffres de référence sont utilisés pour désigner des éléments identiques.

La colonne de direction d'un véhicule automobile est constituée d'un corps 1 d'axe 32 comprenant une partie avant 2 située vers l'avant du véhicule et une partie arrière 3 située du côté du conducteur. Cette partie arrière est destinée à recevoir un volant à son extrémité, et avantageusement un coussin gonflable de sécurité pour répartir les efforts dus à un choc éventuel sur le conducteur.

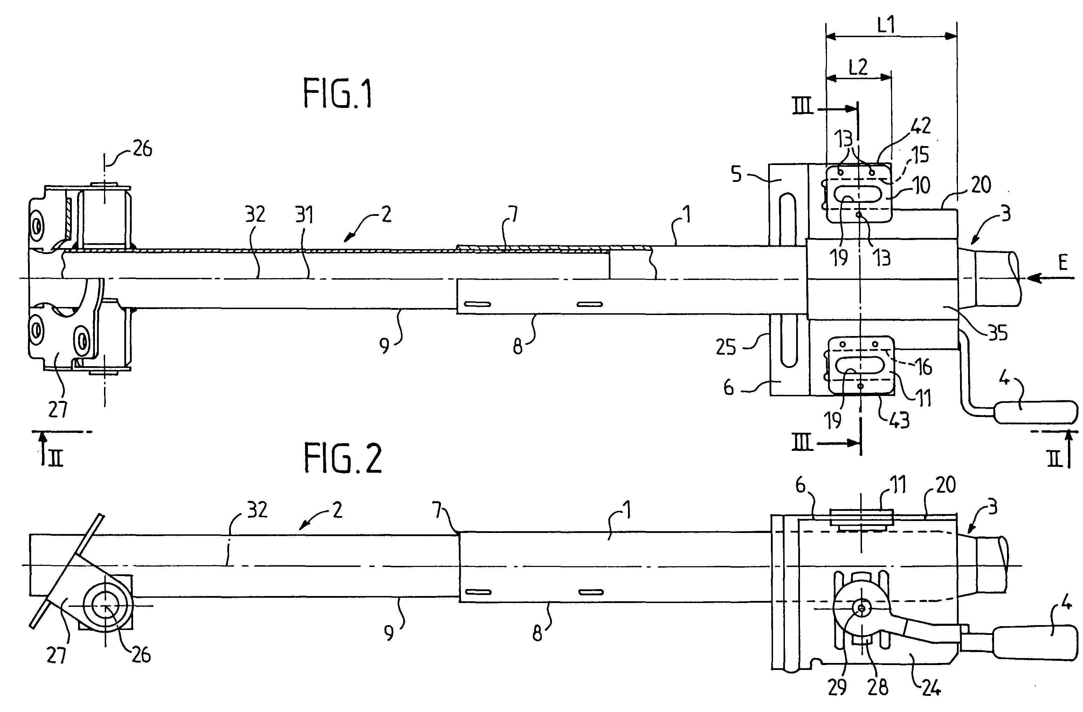

Dans les modes de réalisation représentés aux Figures 1 à 5, la colonne est munie d'un support rectangulaire 24 solidaire de sa partie arrière 3 par l'intermédiaire d'un carré-renfort 35. Le support 24 comporte deux pattes 5 et 6, reliées au châssis (non représenté) du véhicule. Elle comprend également un système télescopique 7 dans sa partie avant, rendant possible le coulissement axial du tube extérieur 8 du corps 1 sur le tube intérieur 9. Un système d'absorption d'énergie classique peut être superposé à ce guidage télescopique.

La partie avant 2 est rigidement liée au châssis du véhicule au moyen de fixations dirigées selon un axe 26. Celles-ci peuvent être des vis associées à des taraudages pratiqués dans le châssis.

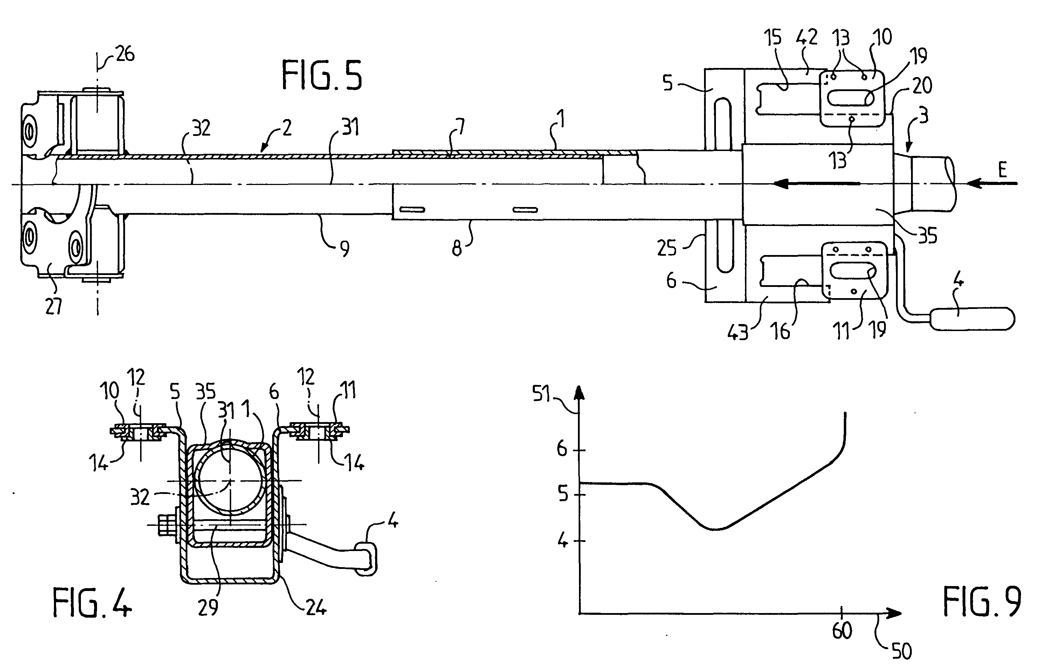

La colonne est ajustable de manière connue en position verticale et en inclinaison. Elle est équipée pour cela d'un dispositif de réglage 27 pivotant autour de l'axe 26, d'un axe de serrage 29 admettant un mouvement vertical dans une fente 28 pratiquée dans le support rectangulaire 24, et d'une manette de verrouillage 4. L'axe de serrage 29 est solidaire du carré-renfort 35. La position de corps de colonne 1 par rapport au châssis est réglée en bloquant le mouvement vertical du carré-renfort 35 fixé à la partie arrière 3, dans le support rectangulaire 24, comme ceci apparaît sur les Figures 2 et 4.

Les pattes 5 et 6 sont approximativement symétriques par rapport à un plan vertical 31 contenant l'axe 32 de la colonne. Elles présentent respectivement des ouvertures 15 et 16 délimitées par des bords extérieurs 42 et 43 ainsi que par des bords intérieurs constituant des surfaces de guidage 20. Ces ouvertures 15 et 16 permettent l'insertion d'ensembles 10 et 11, appelés capsules, les enserrant en partie, par dessus et par dessous, comme on peut le voir notamment sur les Figures 3 et 4. Ces capsules 10 et 11, dont on examinera plus loin la constitution, sont pourvues de fentes dans lesquelles viennent se loger les bords des ouvertures 15 et 16. Dans un exemple spécifique de réalisation, leur dimension longitudinale L2 parallèlement à l'axe 32 de la colonne, vaut environ 20 mm.

Il est à noter que l'axe 32 de la colonne n'est pas nécessairement inclus dans le plan des capsules 10, 11, mais peut être incliné dans le plan vertical 31 par le dispositif de réglage vertical. L'inclinaison restant cependant faible, de l'ordre de quelques degrés, l'axe 32 est en première approximation parallèle au plan des capsules 10, 11.

Les bords extérieurs 42 et 43 des ouvertures 15 et 16 des pattes 5 et 6, sont recouverts sur toute leur longueur L2 par les capsules 10 et 11, tandis que les surfaces de guidage 20 s'étendent au-delà des bords extérieurs 42, 43. Les ouvertures 15 et 16 définissent ainsi des longueurs de guidage L1, pouvant aller avantageusement jusqu'à 100 mm.

Les capsules 10 et 11 sont fixées au châssis par des organes de fixation 12. Ces derniers sont par exemple des vis venant dans des taraudages situés sur le châssis. Les capsules sont pourvues de fenêtres 19 orientées parallèlement à l'axe 32 de la colonne et au travers desquelles passent les organes de fixation 12. Ces fenêtres 19 permettent d'absorber les tolérances entre les pattes 5, 6 solidaires du corps de colonne 1 et le châssis.

Les capsules 10, 11 sont en matière plastique avec des inserts 14 métalliques interposés entre les organes de fixation 12 et les capsules 10, 11, comme on peut le voir sur les Figures 3 et 4.

Généralement, le métal employé pour les capsules est de l'aluminium ou du zamac.

Les pattes 5 et 6 sont susceptibles de coulisser au sein des capsules 10 et 11 en cas de choc, comme on l'a représenté sur la Figure 5.

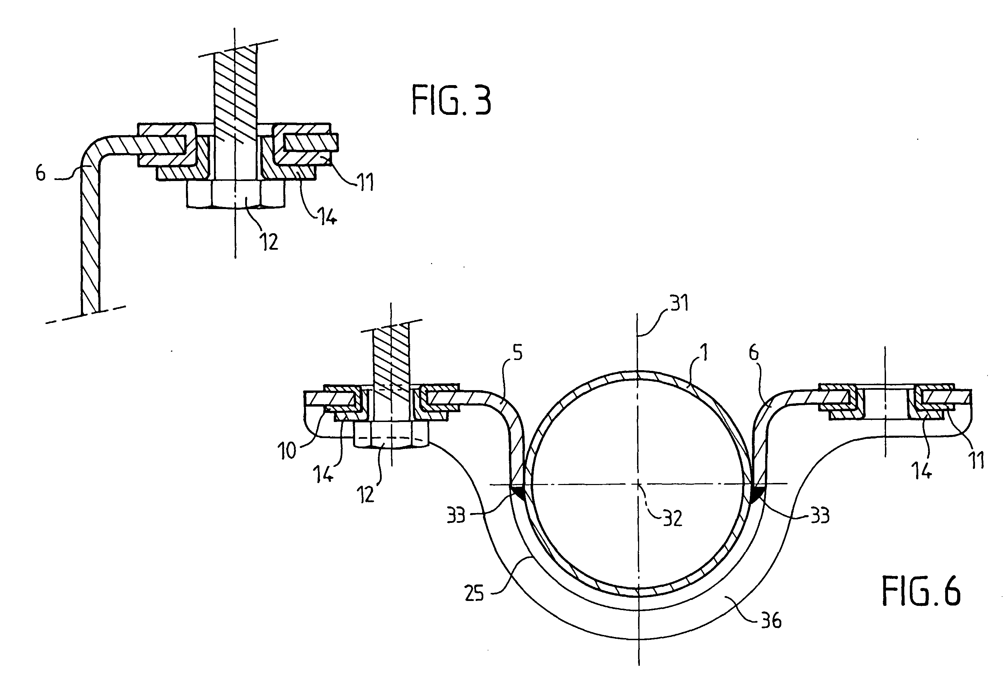

Dans un autre mode de solidarisation possible du corps de colonne 1 au châssis et représenté à la Figure 6, le corps de colonne 1 est fixé à une pièce tubulaire 25 par des soudures 33, la liaison étant affermie par un renfort circulaire 36. Le support constitué par la pièce tubulaire 25 est alors muni de deux pattes 5 et 6 fixées au châssis. Dans ce cas, la colonne n'est pas réglable par rapport au châssis comme dans la réalisation précédente. La structure des pattes 5, 6 et des capsules 10, 11 qui leur sont associées est la même que dans les autres Figures et ne sera donc pas reprise en détail.

Le fonctionnement du dispositif d'absorption d'énergie se déroule comme suit. Au moment du choc du conducteur sur le volant, la colonne de direction subit un impact schématisé par la flèche E de la Figure 1. Le corps 1 de la colonne est alors soumis à des efforts liés à l'énergie cinétique du conducteur.

Sous la poussée, la partie arrière 3 de la colonne tend à se déplacer vers l'avant du véhicule. Les pattes 5, 6 auxquelles elle est liée se déplacent alors par rapport aux capsules 10, 11 fixées au châssis. Les pattes 5, 6 coulissent ainsi dans ces dernières, comme on peut le voir sur la Figure 5.

Les efforts de frottement et de déformation dus aux forces qu'exercent les capsules 10, 11 sur les pattes 5, 6 permettent d'absorber une partie de l'énergie transmise à la colonne.

Dans le mode de réalisation des Figures 1 et 5, au niveau de la partie avant 2 de la colonne, le tube extérieur 8 coulisse sur le tube intérieur 9, ce déplacement pouvant lui-même être associé à des moyens connus procurant une absorption d'énergie complémentaire.

L'effort total généré par l'invention est généralement compris entre 2 et 6 kN. Une énergie comprise entre 200 et 600 Joules est ainsi absorbée, ce qui correspond au niveau d'absorption souhaité.

Les surfaces de guidage 20 assurent le guidage axial de la partie arrière 3 de la colonne de façon significative, sur une largeur L1 sensiblement supérieure à celle L2 des capsules 10, 11. L'absorption d'énergie peut ainsi être réalisée de façon progressive et contrôlée tout en assurant le mouvement axial de la colonne, sur toute sa course.

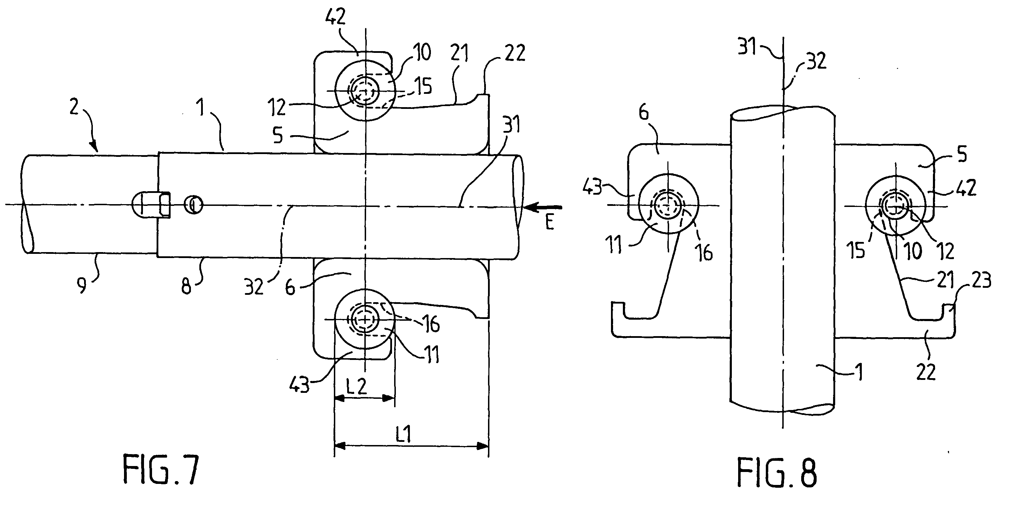

Un mode de réalisation préféré de l'invention apparaît sur la Figure 7. Les surfaces de guidage 21 présentent alors un profil variable dans la direction axiale 32 de la colonne. Plus précisément, les surfaces 21 ont un profil variable à partir des organes de fixation 12, au-delà des bords extérieurs 42, 43 limitant les ouvertures 15, 16 des pattes 5, 6. Comme le représente le dessin, le profil des surfaces 21 s'éloigne régulièrement de l'axe 32 de la colonne. La longueur de guidage L1 peut aller avantageusement jusqu'à 100 mm, et la pente de la courbe suivie par la surface 21 entre 10 et 30°.

Les capsules 10, 11 sont circulaires, ce qui facilite la maîtrise de leur interaction avec les surfaces 21.

Les ouvertures 15, 16 des pattes 5, 6 peuvent être munies d'arrêts 22 (voir Figure 7), constitués par des parties proéminentes transverses à la direction axiale 32.

Ces arrêts 22 peuvent être complétés par des retours 23, visibles sur la Figure 8.

L'ajustement en inclinaison du corps de colonne 1 par rapport au châssis, donc aux pattes 5, 6 est réalisable par un dispositif de réglage en soi connu.

En cas de choc schématisé par la flèche E de la Figure 7, les capsules 10, 11 restent fixées au châssis par les organes de fixation 12, tandis que les pattes 5, 6 sont entraînées en coulissement dans les capsules 10, 11 par le déplacement du corps de colonne 1.

La forme des surfaces de guidage 21 crée alors une interaction progressive entre les pattes 5, 6 et les capsules 10, 11 à mesure que la colonne est déplacée dans son mouvement par rapport au châssis. Cette interaction, faible ou nulle au départ, augmente ainsi de manière progressive. Le profil choisi permet d'obtenir la répartition désirée de l'effort pendant le déplacement du corps 1 de colonne, et d'avoir une très grande latitude pour l'établissement de la relation course/effort.

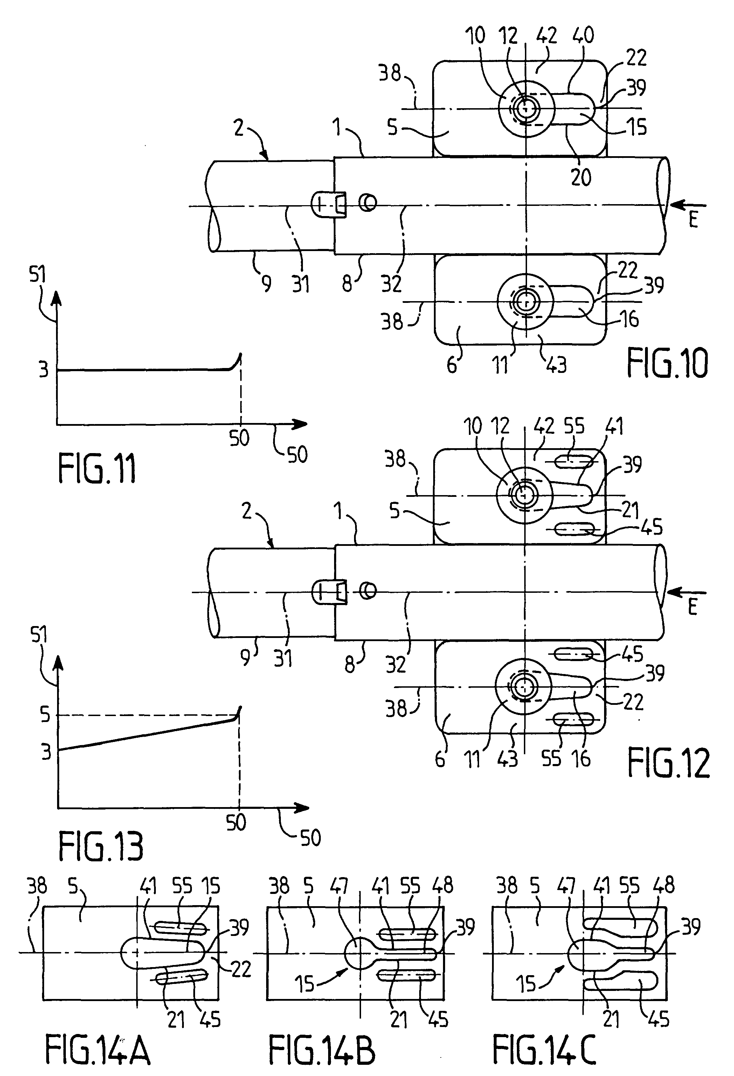

La force exercée par une capsule 10, 11 sur la patte 5, 6 correspondante peut évoluer en fonction de leur déplacement relatif de la façon suivante, schématisée sur le graphe de la Figure 9. Le déplacement y est exprimé en mm et la force en kN. Dans un premier temps, la patte est soumise à une force sensiblement invariante, du fait que son profil reste environ uniforme. Lorsque la capsule se trouve dégagée du bord extérieur 42, 43 où elle enserre la patte de part et d'autre, la force subit alors une faible diminution. L'augmentation de la pente formée par la surface de guidage 21 provoque ensuite une augmentation progressive de l'interaction, jusqu'à l'extrémité de la patte. Dans le cas considéré, la longueur de guidage L1 vaut environ 60 mm et l'effort absorbant l'énergie du choc varie sensiblement entre 4 et 6 kN.

Lorsque la colonne arrive en fin de course, les arrêts 22 l'empêchent de s'échapper des fixations. La présence des retours 23 rend le blocage plus efficace.

En particulier, si une pièce située d'un premier côté de la colonne est endommagée par le choc (arrêt 22, organe de fixation 12), le retour 23 présent de l'autre côté s'oppose au mouvement latéral du corps de colonne 1 vers le premier côté.

Les pattes 5 et 6 peuvent être efficacement réalisées par emboutissage et découpage de pièces en tôle. A titre d'exemple, une patte en tôle d'acier de 2 à 4 mm d'épaisseur avec une pente associée au guidage comprise entre 10 et 30° donne ainsi l'effort recherché, autour de 4 à 6 kN.

Dans un troisième mode de réalisation des pattes 5, 6, représenté sur la Figure 10, chacune des ouvertures 15, 16 des pattes 5, 6 comporte une surface de guidage 20 intérieure par rapport à l'axe 32 de colonne. Comme pour le premier mode de réalisation des pattes, illustré sur les Figures 1 à 6, les surfaces de guidage 20 sont rectilignes et parallèles à l'axe 32 de colonne. Cependant, dans ce troisième mode de réalisation des pattes 5, 6, les ouvertures 15, 16 des pattes 5, 6 sont bordées extérieurement par rapport à l'axe 32 de colonne par des surfaces extérieures de guidage 40, parallèles aux surfaces intérieures de guidage 20. Ces surfaces extérieures de guidage 40 sont obtenues par le fait que les bords extérieurs 42 et 43 des ouvertures 15 et 16 s'étendent sur toute la longueur des surfaces intérieures de guidage 20.

D'autre part, les ouvertures 15, 16 des pattes 5, 6 sont limitées vers l'arrière du véhicule par des arrêts 22 définissant des extrémités arrière 39. Ces arrêts 22 servent à stopper un mouvement du corps 1 de colonne après un déplacement égal à la longueur L1 de guidage. Ils renforcent également la liaison entre les bords extérieurs 42, 43 des ouvertures 15, 16 et le restant des pattes 5, 6, raffermissant ainsi la fiabilité des surfaces extérieures de guidage 40.

De la sorte, les ouvertures 15, 16 sont totalement entourées par la matière des pattes 5, 6. Elles forment des trous oblongs dans lesquels sont susceptibles de coulisser les capsules 10 et 11.

Plus précisément, chacune des pattes 5, 6 est symétrique par rapport à un plan 38 parallèle à l'axe 32 de colonne et perpendiculaire au plan des capsules 10, 11.

En cas de choc schématisé par la flèche E de la Figure 10, les pattes 5, 6 sont entraînées en coulissement dans les capsules 10, 11 fixées au châssis, par le déplacement du corps de colonne 1.

La force exercée par une capsule 10, 11 sur la patte 5, 6 correspondante est alors sensiblement invariante en fonction de leur déplacement relatif, et est due exclusivement à des efforts de frottements. A titre d'illustration, la longueur L1 de guidage vaut 50 mm et la force exercée 3 kN, comme représenté sur la Figure 11. En bout de course, le corps 1 de colonne est retenu dans son mouvement par rapport au châssis du véhicule grâce aux arrêts 22. Il s'ensuit que la force exercée augmente tandis que le déplacement relatif de la capsule 10, 11 par rapport à la patte 5, 6 associée reste constant et égal à 50 mm.

Dans un quatrième mode de réalisation des pattes 5, 6, représenté sur la Figure 12, les ouvertures 15, 16 présentent des surfaces intérieures de guidage 21 à profil variable, comme dans le deuxième mode de réalisation des pattes 5, 6 représenté sur les Figures 7 et 8. De même que pour le troisième mode de réalisation, les ouvertures 15, 16 sont bordées extérieurement par des surfaces extérieures de guidage 41, et limitées vers l'arrière du véhicule par des arrêts 22. Les surfaces de guidage 21 et 41 sont approximativement rectilignes et inclinées dans le plan des capsules 10, 11 par rapport à l'axe 32 de la colonne. La surface intérieure de guidage 21 suit un profil s'éloignant de l'axe 32, vers l'arrière du véhicule, tandis que la surface extérieure de guidage 41 suit un profil s'en rapprochant, les angles d'inclinaison des deux profils étant opposés. De même que dans le troisième mode de réalisation, les pattes 5, 6 sont symétriques par rapport aux plans de symétrie 38 définis précédemment.

Les ouvertures 15, 16 pratiquées dans les pattes 5, 6 sont complétées par des trous complémentaires 45, 55 les bordant respectivement du côté de l'axe 32 de colonne et du côté opposé. Ces trous complémentaires 45, 55 se présentent comme des fentes rectilignes parallèles à l'axe 32. Ils s'étendent approximativement depuis les milieux des ouvertures 15, 16 jusqu'à leurs extrémités arrière 39 situées vers l'arrière du véhicule. Les trous complémentaires 45, 55 ont pour fonction de mieux contrôler les déformations des pattes 5, 6 lors du déplacement des capsules 10, 11 dans les ouvertures 15, 16.

La force exercée par une capsule 10, 11 sur le patte 5, 6 correspondante, schématisée sur la Figure 13, présente une allure croissante en fonction de leur déplacement relatif. La force augmente de façon approximativement linéaire entre 3 kN et 5 kN. Lorsque les capsules 10, 11 parviennent aux arrêts 22, à la suite d'un déplacement relatif égal à 50 mm, la force exercée croît au delà de 5 kN.

Les modes de réalisation des pattes décrits précédemment, loin d'être limitatifs, donnent des illustrations typiques pouvant servir de base à toutes sortes d'autres profils. Une grande variété de formes est en fait possible de façon à obtenir l'effort désiré pendant le déplacement du corps 1 de la colonne.

Trois autres modes de réalisation des pattes 5, 6, schématisés sur les Figures 14A, 14B et 14C permettent d'illustrer des variantes pratiquement intéressantes, mais ce à titre nullement limitatif. Dans ces trois modes de réalisation, les pattes 5, 6 sont symétriques par rapport à des plans 38, limitées par des arrêts 22 vers l'arrière du véhicule, et associées à des trous complémentaires 45, 55.

Dans le cinquième mode de réalisation des pattes 5, 6, représenté sur la Figure 14A, les ouvertures 15, 16 ont une forme similaire à celle du quatrième mode de réalisation (Figure 12). Elles présentent donc des surfaces de guidage 21, 41 rectilignes inclinées par rapport à l'axe 32 de la colonne. Comme dans le quatrième mode de réalisation, les trous complémentaires 45, 55 ont la forme de fentes rectilignes. Cependant, dans ce cinquième mode de réalisation, ils sont inclinés par rapport à l'axe 32 de la colonne. Plus précisément, les trous complémentaires intérieurs 45 et extérieurs 55 ont des pentes respectivement égales à celles des surfaces de guidage intérieure 21 et extérieure 41. Les trous complémentaires 45, 55, disposés au voisinage immédiat des ouvertures 15, 16, s'étendent au-delà de leurs extrémités arrière 39 vers l'arrière du véhicule, et au-delà de leur mi-longueur vers l'avant du véhicule. Leurs formes suivent donc de très près les profils des surfaces de guidage 21, 41, permettant ainsi un accompagnement précis des déformations des pattes 5, 6 en cas de choc.

Dans le sixième mode de réalisation des pattes 5, 6, apparaissant sur la Figure 14B, les ouvertures 15, 16 sont constituées d'une partie ovale 47 prolongée par une partie allongée 48 se présentant comme une fente rectiligne, parallèle à l'axe 32 de colonne. Les trous complémentaires 45, 55 rectilignes s'étendent de part et d'autre de la partie allongée 48 de chaque patte 5, 6, la débordant à son arrière 39 vers l'arrière du véhicule.

Dans ce sixième mode de réalisation, les ouvertures 15, 16 opposent peu de résistance au coulissement des pattes 5, 6 dans les capsules 10, 11 dans leurs parties ovales 47. Lorsque les capsules 10, 11 parviennent à l'entrée des parties allongées 48, une force de résistance importante apparaît, absorbant une grande part de l'énergie due à un choc. Cette force reste sensiblement constante jusqu'à ce que les capsules 10, 11 parviennent aux extrémités arrières 39 des parties allongées 48.

Selon le septième mode de réalisation des pattes 5, 6, représenté à la Figure 14C, les ouvertures 15, 16 comportent comme dans le sixième mode de réalisation (Figure 14B) une partie approximativement ovale 47 et une partie allongée 48. La partie ovale 47 est cependant plus grande que dans le mode de réalisation précédent, et couvre approximativement la moitié de la longueur de guidage L1. La partie ovale 47 et la partie allongée 48 sont disposées selon les plans de symétrie 38 parallèles à l'axe 32 de la colonne. Des trous complémentaires 45, 55 sont disposés de part et d'autre des ouvertures 15, 16 sur toute leur longueur, à l'exception d'une zone située vers l'avant du véhicule. Les trous complémentaires 45, 55, orientés dans une direction sensiblement rectiligne et parallèle à l'axe 32 de la colonne, épousent du côté des ouvertures 15, 16 les formes des surfaces de guidage respectivement intérieure 21 et extérieure 41.

En cas de choc, le déplacement relatif des capsules 10, 11 et des pattes 5, 6 présente deux phases. Dans la première, les pattes 5, 6 coulissent dans la capsule 10, 11 par les parties ovales 47 des ouvertures 15, 16. La force exercée par chacune des capsules 10, 11 sur la patte 5, 6 correspondante est alors assez faible. Lorsque les capsules 10, 11 parviennent au niveau des parties allongées 48, la force prend une valeur de résistance importante qui permet d'absorber une grande part de l'énergie due au choc. Cette force reste sensiblement constante jusqu'à ce que les capsules 10, 11 atteignent les extrémités arrières 39 des ouvertures 15, 16. Les trous complémentaires 45, 55 permettent une meilleure maîtrise des déformations des pattes 5, 6 pendant tout le déplacement relatif des capsules 10,11 et des pattes 5, 6.

L'homme de métier comprendra que de nombreuses autres formes que celles décrites sont réalisables pour les pattes 5, 6, munies ou non d'arrêts 22, de surfaces extérieures de guidage 40, 41 et de trous complémentaires 45, 55, selon les caractéristiques souhaitées pour l'absorption contrôlée d'énergie lors d'un choc.

En plus de leurs variations dans le plan des capsules 10, 11 par rapport à l'axe 32 de la colonne, les surfaces de guidage 20, 21, 40, 41 peuvent aussi avoir une inclinaison variable par rapport au plan des capsules 10, 11. On peut par ce moyen renforcer les interactions entre les capsules 10, 11 et les pattes 5, 6.

D'autre part, au lieu du système télescopique 7 utilisé pour les fixations avant de la colonne, on peut sans sortir du cadre de l'invention, employer le même dispositif que celui associé aux fixations arrières.

Bien que dans les exemples de réalisation présentés, l'axe 32 de la colonne soit approximativement inclus dans le plan des capsules 10, 11, un angle d'inclinaison peut exister entre l'un et l'autre sans sortir du cadre de l'invention. En effet, en plus de l'inclinaison due au réglage vertical de la colonne, les pattes 5, 6 et les capsules 10, 11 peuvent être disposées dans un plan oblique, du moment que celui-ci est perpendiculaire au plan vertical 31.

Il est avantageux que les surfaces de guidage soient disposées deux à deux symétriquement par rapport au plan vertical 31, telles que celles 20, 21, 40, 41 précédemment décrites. Cependant, des modes de réalisation non symétriques rentrent également dans le cadre de l'invention.

Les signes de référence insérés après les caractéristiques techniques mentionnées dans les revendications, ont pour seul but de faciliter la compréhension de ces dernières, et n'en limitent aucunement la portée.

## Revendications

1. Colonne de direction à dispositif d'absorption d'énergie pour véhicule automobile, comportant un corps de colonne (1), monté sur le châssis du véhicule par l'intermédiaire de pattes (5, 6), lesdites pattes (5,6) comportant des ouvertures (15, 16) pour le passage d'organes de fixation (12) au châssis, et des ensembles ou capsules (10, 11) en matière plastique associée à au moins certaines desdites pattes (5, 6) et les enserrant au moins partiellement, lesdites capsules (10, 11) étant maintenues par lesdits organes de fixation (12), de manière qu'en cas de choc, les pattes (5, 6) solidaires du corps de colonne (1) se déplacent par rapport aux capsules (10, 11) fixées au châssis, le déplacement relatif d'une patte (5, 6) par rapport à la capsule (10, 11) qui lui est associée ayant un effet d'absorption de l'énergie due au choc, lesdites ouvertures (15, 16) des pattes (5, 6) comportant des surfaces de guidage (20, 21, 40, 41) disposées deux à deux de part et d'autre d'un plan vertical (31) contenant l'axe (32) de la colonne, lesdites surfaces de guidage coulissant dans lesdites capsules (10, 11) maintenues par lesdits organes (12) en cas de choc, les surfaces de guidage (20, 21, 40, 41) ayant des longueurs de guidage (L1) suffisamment grandes pour contrôler le déplacement de la colonne dans une direction de guidage sensiblement parallèle à l'axe (32) de la colonne, **caractérisée en ce qu'**un insert métallique cylindrique (14) pourvu d'un rebord est interposé entre chacune desdites capsules (10, 11) et l'organe de fixation (12) maintenant ladite capsule (10, 11), la partie cylindrique de l'insert étant située dans une fenêtre (19) de la capsule (10, 11) au travers de laquelle passe l'organe de fixation (12) et le rebord étant en appui sur la partie de la capsule (10, 11) entourant la fenêtre (19) et recevant les efforts de l'organe de fixation (12).

2. Colonne selon la revendication 1, **caractérisée en ce que** les longueurs de guidage (L1) sur les pattes (5, 6) peuvent aller jusqu'à 100 mm.

3. Colonne selon l'une des revendications 1 ou 2, **caractérisée en ce que** les surfaces de guidage (20, 21, 40, 41) sont disposées deux à deux symétriquement ou non symétriquement par rapport audit plan vertical (31).

4. Colonne selon l'une quelconque des revendications précédentes, **caractérisée en ce que** les surfaces de guidage (20, 40) sont sensiblement rectilignes et s'étendent dans une direction sensiblement parallèle audit plan vertical (31).

5. Colonne selon l'une quelconque des revendications 1 à 3, **caractérisée en ce que** certaines au moins des surfaces de guidage (21, 41) présentent un profil variable selon l'axe (32) de la colonne, permettant de contrôler la coopération entre ladite surface (21, 41) et la capsule (10, 11) coulissant sur elle.

6. Colonne selon la revendication 5, **caractérisée en ce que** certaines au moins des surfaces de guidage (21, 41) suivent une courbe évoluant de façon monotone en direction de l'ouverture (15, 16) associée.

7. Colonne selon la revendication 6, **caractérisée en ce que** ladite courbe suivie par certaines des surfaces de guidage (21, 41) a une pente comprise entre 10 et 30°.

8. Colonne selon l'une quelconque des revendications précédentes, **caractérisée en ce qu'**au moins une patte (5, 6) est équipée d'au moins une butée ou arrêt (22), consistant en une partie proéminente non parallèle à la direction de guidage, empêchant la colonne d'échapper aux fixations quand elle arrive en fin de course.

9. Colonne selon la revendication 8, **caractérisée en ce que** ledit arrêt (22) est muni d'un retour (23) consistant en une protubérance inclinée par rapport audit arrêt et approximativement orienté vers la capsule (10, 11) associée audit arrêt (22).

10. Colonne selon l'une quelconque des revendications précédentes, **caractérisée en ce que** certaines au moins desdites ouvertures (15, 16) sont bordées de part et d'autre par rapport audit plan vertical (31), de surfaces de guidage intérieures (20, 21) et extérieures (40, 41).

11. Colonne selon l'une quelconque des revendications précédentes, **caractérisée en ce que** certaines desdites pattes (5, 6) comportent des trous complémentaires (45, 55) disposés au long d'au moins une partie des ouvertures (15, 16), lesdits trous complémentaires (45, 55) permettant de maîtriser des déformations desdites pattes (5, 6) en cas de choc.

12. Colonne selon l'une quelconque des revendications précédentes comprenant une première partie ou partie arrière (3) situées du côté conducteur et une seconde partie ou partie avant (2) située vers l'avant dudit véhicule, et des fixations arrières et avant placées respectivement à l'arrière et à l'avant de la colonne, **caractérisée en ce que** ledit dispositif d'absorption d'énergie est prévu à la fois au niveau des fixations arrière et avant.

13. Colonne selon l'une quelconque des revendications 1 à 11, comprenant une première partie ou partie arrière (3) située du côté conducteur et une seconde partie ou partie avant (2) située vers l'avant dudit véhicule, et les fixations arrière et avant placées respectivement à l'arrière et à l'avant de la colonne, **caractérisée en ce que** ledit dispositif d'absorption d'énergie est installé au niveau de la fixation arrière, un système de guidage télescopique (7) en soi connu du corps (1) de la colonne étant installé à l'avant pour permettre le mouvement de la partie arrière (3) de la colonne par rapport à la fixation avant.

14. Colonne de direction selon l'une quelconque des revendications précédentes, **caractérisée en ce que** l'effort généré par ledit système d'absorption d'énergie est compris entre 2000 et 6000N.

15. Colonne selon l'une quelconque des revendications précédentes, **caractérisée en ce qu'**elle est munie d'un coussin gonflable de sécurité servant à répartir l'effort du volant sur le conducteur.

## Claims

1. Steering column with an energy absorption device for a motor vehicle comprising a column body (1) mounted on the frame of the vehicle by means of brackets (5, 6), said brackets (5, 6) comprising openings (15, 16) for the passage of fixing elements (12) for fixing to the frame, and plastic units or capsules (10, 11) associated with at least some of said brackets (5, 6) and surrounding them, at least partially, said capsules (10, 11) being retained by said fixing elements (12), so that should an impact occur, the brackets (5, 6) integral with the column body (1) move with respect to the capsules (10, 11) fixed to the frame, the relative movement of a bracket (5, 6) with respect to the capsule (10, 11) associated with it having an effect of absorbing the energy due to the impact, said openings (15, 16) of the brackets (5, 6) comprising guiding surfaces (20, 21, 40, 41) which are disposed two by two on both sides of a vertical plane (31) comprising the axis (32) of the column, said guiding surface sliding into said capsules (10,11) held by said elements (12) if an impact occurs, the guiding lengths (L-1) of the guiding surfaces (20, 21, 40, 41) being sufficiently large so as to control movement of the column in a guiding direction substantially parallei to the axis (32) of the column, **characterized in that** a metallic insert (14) provided with a rim is inserted between each of said capsules (10, 11) and the fixing element (12) holding said capsule (10,11), the cylindrical portion of the insert being provided in a window (19) of the capsule (10,11) though which is provided the fixing element (12) and the rime bears on the portion of the capsule (10,11) surrounding the window (19) and receiving the strains of the fixing element (12).

2. Column according to claim 1, **characterized in that** the guiding lengths (L-1) on the brackets (5, 6) extend up to 100 mm.

3. Column according to claim 1 or 2, **characterized in that** the guiding surfaces (20, 21, 40, 41) are disposed two by two, symmetrically or otherwise, with respect to said vertical plane (31).

4. Column according to any one of the preceding claims, **characterized in that** the guiding surfaces (20, 40) are substantially rectilinear and extend in a direction substantially parallel to said vertical plane (31).

5. Column according to any one of claims 1 to 3, **characterized in that** at least some of the guiding surfaces (21, 41) have a variable profile along the axis (32) of the column, making it possible to control cooperation between said surface (21, 41) and the capsule (10, 11) sliding on it.

6. Column according to claim 5, **characterized in that** at least some of the guiding surfaces (21, 41) follow a curve varying monotonously in the direction of the associated opening (15, 16).

7. Column according to claim 6, **characterized in that** said curve followed by some of the guiding surfaces (21, 41) has a slope of between 10° and 30°.

8. Column according to any one of the preceding claims, **characterized in that** at least one bracket (5, 6) is equipped with at least one stop (22) consisting of a projecting portion not parallel to the guiding direction, preventing the column from escaping from the holding devices when it arrives at the end of travel.

9. Column according to claim 8, **characterized in that** said stop (22) is provided with a return (23) consisting of a protuberance slanted with respect to said stop and substantially orientated towards the capsule (10, 11) associated with said stop (22).

10. Column according to any one of the preceding claims, **characterized in that** at least some of said openings (15, 16) are bordered on both sides with respect to said vertical plane (31), with internal (20, 21) and external (40, 41) guiding surfaces.

11. Column according to any one of the preceding claims, **characterized in that** some of said brackets (5, 6) comprise complementary holes (45, 55) disposed along at least one portion of the openings (15, 16), said complementary holes (45, 55) making it possible to control the deformations of said brackets (5, 6) if an impact occurs.

12. Column according to any one of the preceding claims, comprising a first portion or rear portion (3) situated on the driver side and a second portion or front portion (2) situated towards the front of said vehicle, and rear and front holding devices placed respectively at the rear and at the front of the column, **characterized in that** said energy absorption device is provided at both the level of the rear and front holding devices.

13. Column according to any one of claims 1 to 11, comprising a first portion or rear portion (3) situated on the driver side and a second portion or front portion (2) situated towards the front of said vehicle, and rear and front holding devices placed respectively at the rear and at the front of the column, **characterized in that** said energy absorption device is installed at the level of the rear holding device, a known type of telescopic guiding system (7) for the body (1) of the column being installed at the front so as to allow the movement of the rear portion (3) of the column with respect to the front holding device.

14. Column according to any one of the preceding claims, **characterized in that** the strain generated by said energy absorption device is between 2000 and 6000 N.

15. Column according to any one of the preceding claims, **characterized in that** it is provided with an inflatable air bag used to distribute the strain of the steering wheel on the driver.

## Patentansprüche

1. Lenksäule mit Energieaufnahmevorrichtung für ein Kraftfahrzeug, umfassend einen Lenksäulenkörper (1), der auf dem Fahrgestell des Fahrzeugs mit Hilfe von Befestigungseisen (5, 6) montiert ist, welche Befestigungseisen (5, 6) Öffnungen (15, 16) für den Durchgang von Elementen (12) zur Befestigung am Fahrgestell umfassen, und Einheiten oder Kapseln (10, 11) aus Kunststoff, die mit mindestens einigen der Befestigungseisen (5, 6) verbunden sind und diese zumindest teilweise einklemmen, wobei die Kapseln (10, 11) von den Befestigungselementen (12) derart gehalten werden, dass sich im Falle eines Aufpralls die mit der Lenksäule (1) verbundenen Befestigungseisen (5, 6) in bezug auf die Kapseln (10, 11), die am Fahrgestell befestigt sind, verschieben, wobei die relative Verschiebung eines Befestigungseisens (5, 6) in bezug auf die mit ihm verbundene Kapsel (10, 11) eine Aufnahmewirkung für die von einem Aufprall kommende Energie hat, wobei die Öffnungen (15, 16) der Befestigungseisen (5, 6) Führungsflächen (20, 21, 40, 41) umfassen, die paarweise beiderseits einer Vertikalebene (31) angeordnet sind, die die Achse (32) der Säule enthält, wobei die Führungsflächen in den Kapseln (10, 11) gleiten, die von den Elementen (12) im Falle eines Aufpralls gehalten werden, wobei die Führungsflächen (20, 21, 40, 41) Führungslängen (L1) aufweisen, die groß genug sind, um die Verschiebung der Lenksäule in eine Führungsrichtung im wesentlichen parallel zur Achse (32) der Lenksäule zu kontrollieren, **dadurch gekennzeichnet, daß** ein zylindrischer metallischer Einsatz (14), der mit einem Rand versehen ist, zwischen jeder der Kapseln (10, 11) und dem Befestigungselement (12), das die Kapsel (10, 11) hält, eingesetzt ist, wobei der zylindrische Teil des Einsatzes in einem Fenster (19) der Kapsel (10, 11) angeordnet ist, durch das das Befestigungselement (12) hindurchgeht, und der Rand auf dem Teil der Kapsel (10, 11) aufliegt, der das Fenster (19) umgibt und die Kräfte des Befestigungselements (12) aufnimmt.

2. Lenksäule nach Anspruch 1, **dadurch gekennzeichnet, dass** die Führungslängen (L1) auf den Befestigungseisen (5, 6) bis zu 100 mm lang sein können.

3. Lenksäule nach einem der Ansprüche 1 oder 2, **dadurch gekennzeichnet, dass** die Führungsflächen (20, 21, 40, 41) paarweise symmetrisch oder nicht symmetrisch zu der Vertikalebene (31) angeordnet sind.

4. Lenksäule nach einem der vorstehenden Ansprüche, **dadurch gekennzeichnet, dass** die Führungsflächen (20, 40) im wesentlichen gerade sind und sich in einer im wesentlichen zu der Vertikalebene (31) parallelen Richtung erstrecken.

5. Lenksäule nach einem der Ansprüche 1 bis 3, **dadurch gekennzeichnet, dass** zumindest einige der Führungsflächen (21, 41) ein variables Profil entlang der Achse (32) der Lenksäule aufweisen, wodurch es möglich ist, das Zusammenwirken zwischen der Fläche (22, 41) und der Kapsel (10, 11), die auf ihr gleitet, zu kontrollieren.

6. Lenksäule nach Anspruch 5, **dadurch gekennzeichnet, dass** zumindest einige der Führungsflächen (21, 41) einer Kurve folgen, die sich monoton in Richtung der zugehörigen Öffnung (15, 16) entwickelt.

7. Lenksäule nach Anspruch 6, **dadurch gekennzeichnet, dass** die Kurve, der einige der Führungsflächen (21, 41) folgen, ein Gefälle zwischen 10 und 20 ° aufweist.

8. Lenksäule nach einem der vorstehenden Ansprüche, **dadurch gekennzeichnet, dass** mindestens ein Befestigungseisen (5, 6) mit mindestens einem Anschlag oder Stop (22) versehen ist, der in einem vorspringenden Teil, der nicht zur Führungsrichtung parallel ist, besteht, welcher die Lenksäule daran hindert, aus den Befestigungen zu springen, wenn sie am Anschlag ankommt.

9. Lenksäule nach Anspruch 8, **dadurch gekennzeichnet, dass** der Anschlag (22) mit einer Rückfederung (23) versehen ist, die in einem Vorsprung besteht, der in bezug auf den Anschlag geneigt und annähernd zu der Kapsel (10, 11) ausgerichtet ist, die mit dem Anschlag (22) verbunden ist.

10. Lenksäule nach einem der vorstehenden Ansprüche, **dadurch gekennzeichnet, dass** zumindest manche der Öffnungen (15, 16) beiderseits zur Vertikalebene (31) von inneren (20, 21) und äußeren (40, 41) Führungsflächen umrandet sind.

11. Lenksäule nach einem der vorstehenden Ansprüche, **dadurch gekennzeichnet, dass** manche der Befestigungseisen (5, 6) komplementäre Löcher (45, 55) umfassen, die entlang von mindestens einem Teil der Öffnungen (15, 16) angeordnet sind, wobei es die komplementären Löcher (45, 55) ermöglichen, Verformungen der Befestigungseisen (5, 6) im Falle eines Aufpralls zu kontrollieren.

12. Lenksäule nach einem der vorstehenden Ansprüche, umfassend einen ersten Teil oder hinteren Teil (3), der sich auf der Fahrerseite befindet, und einen zweiten Teil oder vorderen Teil (2), der sich nach vorne zum Fahrzeug hin erstreckt, und hintere und vordere Befestigungen, die hinten bzw. vorne an der Lenksäule angeordnet sind, **dadurch gekennzeichnet, dass** die Energieaufnahmevorrichtung sowohl auf Höhe der hinteren als auch der vorderen Befestigung vorgesehen ist.

13. Lenksäule nach einem der Ansprüche 1 bis 11, umfassend einen ersten Teil oder hinteren Teil (3), der sich auf der Fahrerseite befindet, und einen zweiten Teil oder vorderen Teil (2), der sich nach vorne zum Fahrzeug hin erstreckt, und hintere und vordere Befestigungen, die hinten bzw. vorne an der Lenksäule angeordnet sind, **dadurch gekennzeichnet, dass** die Energieaufnahmevorrichtung auf Höhe der hinteren Befestigung eingebaut ist, wobei ein an sich bekanntes teleskopisches Führungssystem (7) für den Körper (1) der Lenksäule vorne eingebaut ist, um die Bewegung des hinteren Teils (3) der Lenksäule in bezug auf die vordere Befestigung zu ermöglichen.

14. Lenksäule nach einem der vorstehenden Ansprüche, **dadurch gekennzeichnet, dass** die von dem Energieaufnahmesystem erzeugte Kraft zwischen 2000 und 6000 N liegt.

15. Lenksäule nach einem der vorstehenden Ansprüche, **dadurch gekennzeichnet, dass** sie mit einem Airbag versehen ist, der dazu dient, die Kraft des Lenkrades auf den Fahrer zu verteilen.
